# FASCICULE DE BREVET EUROPEEN

(11) **EP 2 971 730 B1**
(45) Date de publication et mention de la délivrance du brevet: **29.04.2020**
(21) Numéro de dépôt: 14720992.8
(22) Date de dépôt: 13.03.2014
(51) Int. Cl.: F02K 1/72, F02K 1/76

(54) **DISPOSITIF D'INHIBITION MÉCANIQUE INTÉGRÉ À UNE LIGNE DE DÉFENSE D'UN INVERSEUR DE POUSSÉE**
IN EINE SPERREINRICHTUNG EINER SCHUBUMKEHRVORRICHTUNG INTEGRIERTE MECHANISCHE HEMMVORRICHTUNG
MECHANICAL INHIBITING DEVICE INTEGRATED INTO A DEFENCE LINE OF A THRUST REVERSER

(30) Priorité: 15.03.2013 FR 1352329
(43) Date de publication de la demande: 20.01.2016
(73) Titulaire: Safran Nacelles, 76700 Gonfreville-l'Orcher (FR)
(72) Inventeur: KIOUA, Hazem, F-76280 Saint Jouin Bruneval (FR); VALLEROY, Laurent Georges, F-76600 Le Havre (FR); LESCURE, Jérôme, F-76100 Rouen (FR); CORFA, Jérôme, F-14430 Cresseveuille (FR)
(74) Mandataire: Delorme, Nicolas
(86) Numéro de dépôt international: PCT/FR2014/050577
(87) Numéro de publication internationale: WO 2014/140491

(56) Documents cités:
- WO-A2-01/57382
- US-A- 5 720 449
- US-A1- 2010 058 736
- US-A1- 2010 264 676
- US-A1- 2011 167 786

## Description

La présente invention se rapporte à un dispositif d'inversion de poussée pour nacelle pour turboréacteur double flux, ainsi qu'à une nacelle équipée d'un tel dispositif.

Un avion est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval intégrant éventuellement des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en œuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

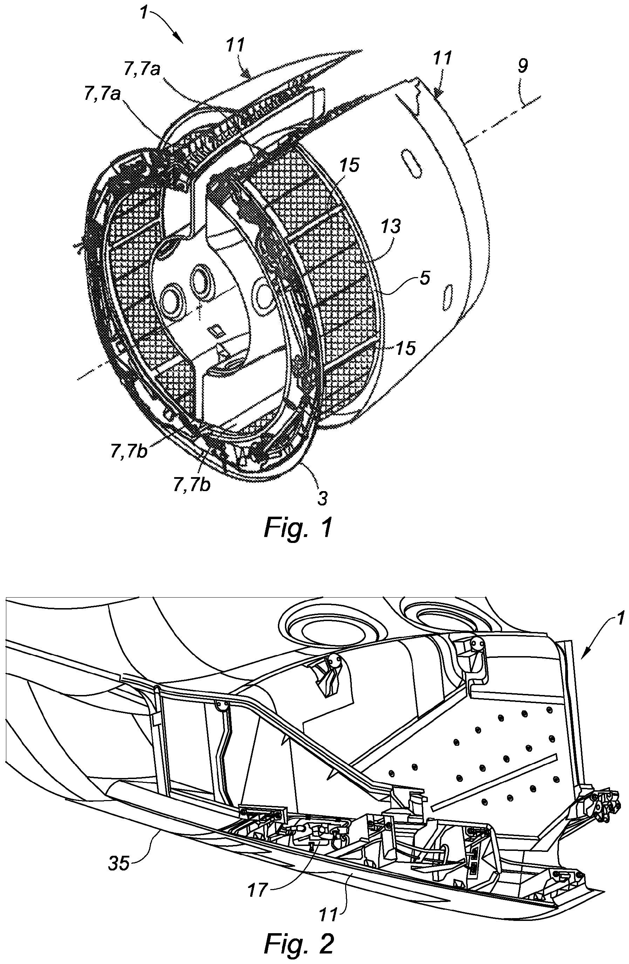

On se réfère à la figure 1, illustrant un inverseur de poussée à grilles 1 bien connu de l'art antérieur.

Il comporte une structure fixe constituée par un cadre avant 3 et un cadre arrière 5, le cadre avant 3 et le cadre arrière 5 étant reliés entre eux par des poutres longitudinales 7 sensiblement parallèles à un axe longitudinal 9 du dispositif d'inversion de poussée.

Les poutres longitudinales 7 sont diamétralement opposées par rapport à l'axe longitudinal 9, la première poutre longitudinale 7a dite "à 12 heures" étant en regard du mât de l'avion soit habituellement en haut de l'inverseur, la seconde poutre longitudinale 7b dite "à 6 heures" étant diamétralement opposée à la première par rapport à l'axe longitudinal 9, soit habituellement en bas de l'inverseur.

L'inverseur 1 comporte également au moins un élément mobile typiquement constitué par deux capots 11 mobiles entre une position d'escamotage recouvrant des grilles de déviation 13 d'un flux d'air secondaire et une position déployée (telle que représentée sur la figure 1) selon laquelle lesdits capots se trouvent dans une position aval de la nacelle, découvrant les grilles de déviation, de façon à permettre la réorientation du flux d'air traversant la nacelle vers l'amont de la nacelle lors d'un fonctionnement en jet inverse.

L'amont et l'aval de la nacelle sont définis par référence au sens d'écoulement du flux d'air dans la nacelle en fonctionnement jet direct, l'amont de la nacelle correspondant à une partie de la nacelle par laquelle le flux pénètre, et l'aval correspondant à une zone d'éjection dudit flux d'air.

On note que dans le cas d'un inverseur de type O-duct (canal en « O »), la structure fixe de l'inverseur comprend un cadre avant et un cadre arrière relié par une unique poutre longitudinale sommitale à 12 heures, et la structure mobile de l'inverseur comprend un unique capot, mobile entre sa position d'escamotage et sa position déployée.

L'inverseur comprend en outre des moyens de guidage des capots, comprenant un rail solidaire de chaque capot et coulissant dans des glissières attachées aux poutres longitudinales, par exemple sur leurs flancs.

Le passage d'une position d'escamotage vers une position déployée est classiquement réalisé par l'intermédiaire moyens de commande constitués habituellement par des vérins à vis 15 attachés au cadre avant 3 et parallèles aux glissières.

On se réfère à la figure 2, représentant le dispositif d'inversion de poussée à grilles 1 (la partie droite de l'inverseur de poussée ayant été ôtée pour plus de visibilité).

Un tel dispositif est équipé de sécurités internes comprenant généralement deux systèmes de verrouillage/déverrouillage, appelés verrous primaires (PLS : Primary Lock System) et un système de verrouillage/déverrouillage 17 appelé verrou tertiaire (TLS : Tertiary Lock System), généralement positionné en partie inférieure du capot mobile 11 de l'inverseur.

Pour un inverseur de poussée de type « O-duct », le système de verrouillage/déverrouillage de l'inverseur est typiquement disposé à l'extrémité arrière de la glissière dans laquelle se déplace le rail de guidage solidaire du capot coulissant.

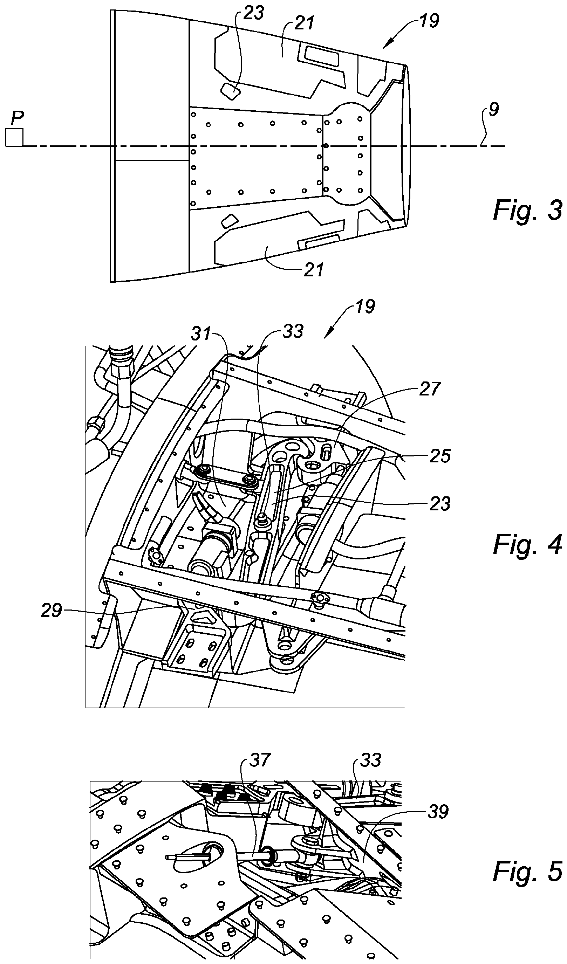

On se réfère à présent à la figure 3, illustrant un dispositif d'inversion de poussée à portes 19 bien connu de l'art antérieur.

La réorientation du flux d'air est effectuée par le passage de portes 21 depuis une position d'escamotage (telle que représentée sur la figure) vers une position déployée selon laquelle les portes s'ouvrent vers l'extérieur du dispositif d'inversion de poussée.

La figure 4 illustre un mode de réalisation du système de verrouillage/déverrouillage 23 équipant les dispositifs d'inversion de poussée à portes 19 selon l'art antérieur.

Une porte comprend typiquement deux systèmes de verrouillage/déverrouillage, positionnés en amont de la porte, de part et d'autre d'un plan longitudinal P passant par l'axe longitudinal 9 du dispositif d'inversion de poussée (voir figure 3).

Le système de verrouillage/déverrouillage 23 comprend un pêne 25 en forme de S apte à coopérer avec deux gâches 27 et 29 chacune solidaire d'une porte (non représentée).

Le pêne 25 est lui-même solidaire d'une structure fixe 31 du dispositif d'inversion de poussée 1, et est monté pivotant sur un axe 33 sensiblement radial.

En position de fermeture du système de verrouillage/déverrouillage, le pêne 25 coopère avec les gâches 27 et 29 maintenant ainsi les portes dans une position d'escamotage. Le passage dans une position d'ouverture du système de verrouillage/déverrouillage s'effectue par le pivotement du pêne 25 entrainant la libération des gâches 27 et 29 et autorisant le passage des portes en position déployée.

On connait également, dans le document US5720449, un inverseur de poussées à portes pivotantes, doté d'un système de sécurité contre le déploiement en vol d'un inverseur de poussée. Le système comporte deux ensembles de verrouillage, le premier étant un verrou principal et le second, un verrou de sécurité qui est positionné à distance du premier verrou pour éviter les dommages causés par une pièce rompue du disque de la turbine du moteur. Le premier verrou est commandé hydrauliquement et le deuxième verrou est commandé électriquement.

Quels que soient le type d'inverseur, à grilles ou à portes, les systèmes de verrouillage sont mobiles alternativement entre une position de fermeture selon laquelle au moins un pêne coopère avec au moins une gâche de façon à assurer le maintien de l'élément mobile dans sa position d'escamotage, et une position d'ouverture selon laquelle ledit pêne libère ladite gâche, de façon à autoriser le passage dudit élément mobile dans sa position déployée.

Ces verrous permettent d'éviter un déploiement inopiné d'un élément mobile de l'inverseur en vol, ce qui serait catastrophique.

Lorsque l'une des sécurités internes de l'inverseur est endommagée, la nacelle est temporairement équipée d'un dispositif d'inhibition mécanique de l'élément mobile de l'inverseur. Ce dispositif permet de maintenir l'élément mobile du dispositif d'inversion de poussée pour lequel le système de verrouillage/déverrouillage est endommagé dans sa position d'escamotage.

Ce dispositif est typiquement installé au sol suite à un signal de dysfonctionnement d'un des dispositifs de verrouillage/déverrouillage détecté au moyen de capteurs et informant le pilote de la panne.

En installant ce dispositif d'inhibition mécanique du dispositif d'inversion de poussée, l'avion reste autorisé à voler, malgré la panne et en toute sécurité. La panne fera ultérieurement l'objet d'opérations de maintenance.

En d'autres termes, le système de verrouillage/déverrouillage est un système actionnable depuis le poste de pilotage de l'avion, contrairement au dispositif d'inhibition mécanique qui est un dispositif que l'on installe manuellement lorsque l'avion est au sol. Le dispositif de verrouillage/déverrouillage interdit le déploiement de l'inverseur de poussée lorsque l'avion est en vol, et autorise son déploiement lorsque l'avion est au sol, afin d'améliorer la capacité de freinage de l'avion lors de son atterrissage. Le dispositif d'inhibition mécanique permet quant à lui d'inhiber le fonctionnement de l'inverseur de poussée tout au long du fonctionnement de l'avion, c'est-à-dire d'interdire son déploiement aussi bien lorsque l'avion est en vol que lorsque l'avion est au sol.

Dans le cas d'un inverseur de poussée à grilles, une telle inhibition mécanique s'effectue généralement par vissage des capots mobiles à une structure fixe de la nacelle, et/ou par la mise en place de pions de blocage 35 (visible sur la figure 2) en aval des capots mobiles selon une direction sensiblement radiale, lesdits pions servant alors de moyens de butée empêchant tout mouvement de translation longitudinale du capot mobile.

Dans le cas d'un inverseur de poussée à portes, une telle inhibition mécanique est typiquement réalisée en plaçant un pion d'inhibition 37 entre la porte (non représentée) et un cadre support de porte 39, comme illustré sur la figure 5.

De tels systèmes présentent de nombreux inconvénients.

Tout d'abord, les pions ou vis doivent être stockés sur l'avion, généralement à l'intérieur d'un logement ménagé dans la nacelle.

Ensuite, la mise en place des pions ou le vissage des capots est une opération longue et fastidieuse nécessitant un outillage adapté.

Le temps de mise en place du dispositif d'inhibition mécanique est en outre relativement long, et l'accès aux zones de la nacelle qui reçoivent ce dispositif d'inhibition mécanique est de manière générale assez peu confortable.

La présente invention vise à résoudre les inconvénients de l'art antérieur, et se rapporte à cet effet à un dispositif d'inversion de poussée pour nacelle de turboréacteur double flux d'aéronef, comprenant :
- des moyens de déviation d'au moins une partie d'un flux d'air du turboréacteur, lesdits moyens de déviation comprenant au moins un élément mobile alternativement entre une position déployée selon laquelle il ouvre un passage dans la nacelle et une position d'escamotage selon laquelle il ferme ledit passage,
- un système de verrouillage/déverrouillage dudit élément mobile, mobile alternativement entre une position de fermeture selon laquelle au moins un pêne coopère avec au moins une gâche de façon à assurer le maintien dudit élément mobile dans sa position d'escamotage, et une position d'ouverture selon laquelle ledit pêne libère ladite gâche, de façon à autoriser le passage dudit élément mobile depuis sa position d'escamotage vers sa position déployée,
- un dispositif d'inhibition mécanique dudit élément mobile, assurant son maintien dans sa position d'escamotage, ledit dispositif d'inversion de poussée étant caractérisé en ce que le dispositif d'inhibition mécanique est installé temporairement et mécaniquement lorsque l'avion est au sol, et est conçu pour interdire le déploiement dudit dispositif d'inversion de poussée aussi bien lorsque ledit aéronef est en vol que lorsque ledit aéronef est au sol,
le dispositif d'inhibition mécanique comprenant des moyens pour maintenir le système de verrouillage/déverrouillage dans sa position de fermeture.

Ainsi, en prévoyant un dispositif d'inhibition mécanique qui agit directement sur le système de verrouillage/déverrouillage de l'élément mobile du dispositif d'inversion de poussée, la mise en place du dispositif d'inhibition mécanique est réalisée de façon simple par un accès au système de verrouillage/déverrouillage, ce qui simplifie considérablement sa mise en place et permet avantageusement de réduire les coûts d'assemblage et le temps de maintenance.

En effet, contrairement à l'art antérieur qui prévoyait un dispositif d'inhibition mécanique installé en partie arrière de chaque capot mobile du dispositif d'inversion de poussée lorsque ce dernier est de type « à grilles », ou qui prévoyait un pion d'inhibition monté à cheval entre chaque porte et son cadre support lorsque le dispositif d'inversion de poussée est de type « à portes », le dispositif d'inhibition mécanique selon l'invention agit directement sur le système de verrouillage/déverrouillage d'un capot mobile ou d'une porte du dispositif d'inversion de poussée.

Ainsi, le dispositif d'inhibition mécanique selon l'invention permet de maintenir en position de fermeture le système de verrouillage/déverrouillage d'un ou des capot(s) ou des portes du dispositif d'inversion de poussée, et en conséquence de maintenir le(s)dit(s) capot(s) ou lesdites portes en position d'escamotage lorsqu'un dysfonctionnement d'un élément de la nacelle a été détecté.

La mise en place du dispositif d'inhibition mécanique, réalisée par l'ouverture d'une trappe d'accès au dispositif de verrouillage/déverrouillage de l'élément mobile, est par conséquent considérablement simplifiée par rapport à la pratique selon l'art antérieur.

Selon une caractéristique optionnelle de l'invention, le système de verrouillage/déverrouillage comprend :
- au moins un pêne solidaire d'une structure fixe du dispositif d'inversion de poussée et monté pivotant sur un axe de pivotement sensiblement radial, et
- au moins une gâche solidaire dudit élément mobile et adaptée pour coopérer avec ledit pêne au moins pour une position de fermeture dudit système de verrouillage/déverrouillage de façon à assurer le maintien en position d'escamotage dudit élément mobile,
et les moyens pour maintenir le système de verrouillage/déverrouillage dans sa position de fermeture comprennent au moins un pion d'inhibition ou au moins une vis d'inhibition positionné de façon à bloquer le pivotement dudit pêne depuis sa position de fermeture vers sa position d'ouverture.

Selon un premier mode de réalisation du dispositif d'inversion de poussée, l'élément mobile est une porte d'un dispositif d'inversion de poussée à portes, et la structure fixe comprend au moins un alésage conformé pour recevoir ledit pion d'inhibition ou ladite vis d'inhibition.

Optionnellement, le pêne comprend en outre un alésage positionné en regard dudit alésage de la structure fixe du dispositif d'inversion de poussée lorsque le système de verrouillage/déverrouillage est en position de fermeture, conformé pour recevoir ledit pion d'inhibition ou ladite vis d'inhibition.

Alternativement, l'élément mobile est une porte d'un dispositif d'inversion de poussée à portes, et la structure fixe comprend un alésage positionné à proximité dudit pêne et conformé pour recevoir ladite vis d'inhibition de façon à bloquer le pivotement dudit pêne depuis sa position de fermeture vers sa position d'ouverture.

Selon un deuxième mode de réalisation du dispositif d'inversion de poussée selon l'invention, l'élément mobile est un capot d'un dispositif d'inversion de poussée à grilles, ledit capot étant mobile en translation par l'intermédiaire d'au moins un rail de guidage coulissant selon une direction sensiblement parallèle à un axe longitudinal dudit dispositif d'inversion de poussée le long d'au moins une glissière solidaire d'une structure fixe de l'inverseur, et le rail de guidage comprend des moyens de support dudit pion d'inhibition ou de ladite vis d'inhibition positionnés à proximité dudit pêne de façon à bloquer le pivotement dudit pêne depuis sa position de fermeture vers sa position d'ouverture lorsque le capot mobile est dans sa position d'escamotage.

Optionnellement, la structure fixe du dispositif d'inversion de poussée comprend une poutre à 12 heures et au moins un cadre avant, et le capot est un capot du type O-duct.

Selon une caractéristique optionnelle commune aux modes de réalisation du dispositif d'inversion de poussée selon l'invention, le système de verrouillage/déverrouillage est un verrou tertiaire.

La présente invention concerne également une nacelle pour turboréacteur double flux comprenant :
- une section avant d'entrée d'air,
- une section médiane destinée à entourer une soufflante de turboréacteur,
- une section arrière équipée d'un dispositif d'inversion de poussée selon l'invention.

D'autres caractéristiques et avantages de la présente invention apparaîtront à la lecture de la description qui va suivre et à l'examen des figures ci-annexées, dans lesquelles :
- les figures 1 et 2 illustrent des inverseurs de poussée à grilles selon l'art antérieur ;
- la figure 3 représente un inverseur de poussée à porte selon l'art antérieur ;
- les figures 4 et 5 illustrent respectivement un dispositif de verrouillage/déverrouillage de portes d'un inverseur de poussée à porte selon l'art antérieur, et un dispositif d'inhibition mécanique pour inverseur de poussée à portes selon l'art antérieur ;
- la figure 6 illustre le dispositif d'inhibition mécanique pour un dispositif d'inversion de poussée à portes selon l'invention ;
- la figure 7 représente une variante de réalisation du dispositif d'inhibition mécanique représenté sur la figure 6 ;
- la figure 8 est une représentation du dispositif d'inhibition mécanique pour un dispositif d'inversion de poussée à grilles selon l'invention.

Sur l'ensemble des figures, des références identiques ou analogues désignent des organes ou ensembles d'organes identiques ou analogues.

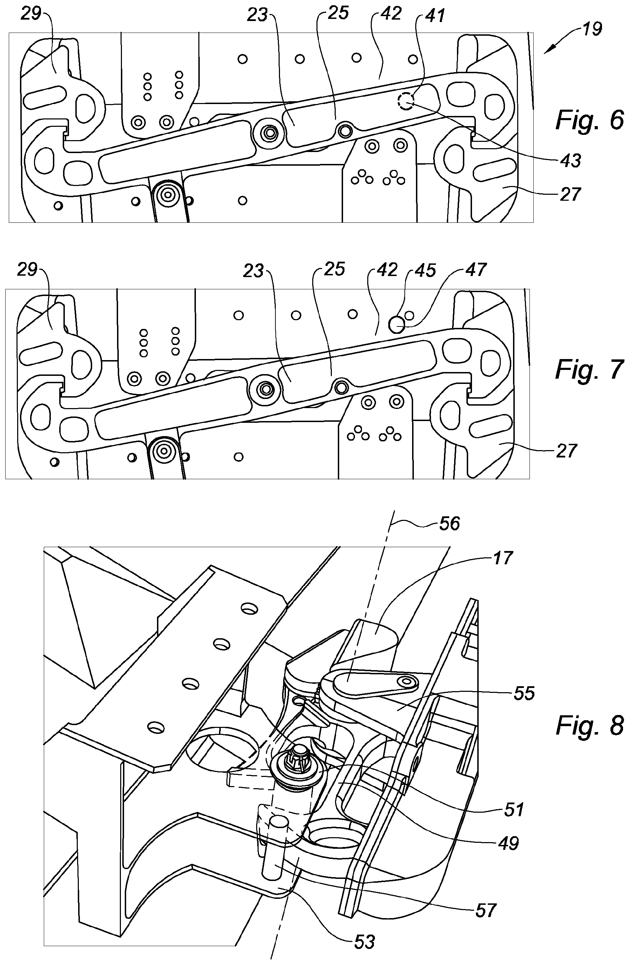

On se réfère à la figure 6 illustrant les moyens pour maintenir le système de verrouillage/déverrouillage en position de fermeture selon un premier mode de réalisation du dispositif d'inversion de poussée selon l'invention.

Le dispositif d'inversion de poussée (ci-après « l'inverseur ») représenté sur cette figure est du type « à portes », c'est-à-dire que l'élément mobile de l'inverseur est une porte.

Le système de verrouillage/déverrouillage 23 de portes comprend, comme précédemment décrit en référence à la figure 4, un pêne 25 coopérant avec les gâches 27 et 29 chacune solidaire d'une porte (non représentée) lorsque ledit dispositif de verrouillage/déverrouillage se trouve dans une position de fermeture.

Selon ce premier mode de réalisation de l'invention, le pêne comprend un alésage 41 positionné en regard d'un alésage supporté par la structure fixe 42 de l'inverseur.

Le dispositif d'inhibition mécanique comprend des moyens pour maintenir le pêne 25 du système de verrouillage/déverrouillage 23 des portes dans sa position de fermeture, constitués par un pion d'inhibition 43 conformé pour pénétrer l'alésage 41 du pêne 25 et l'alésage de la structure fixe 42 de l'inverseur, lorsque le pêne se trouve dans sa position de fermeture.

Selon une variante non représentée, l'alésage 41 du pêne et l'alésage de la structure fixe 42 de l'inverseur peuvent être taraudés, et les moyens pour maintenir le pêne 25 du système de verrouillage/déverrouillage 23 dans sa position de fermeture sont alors constitués par une vis d'inhibition conformée pour pénétrer l'alésage 41 et l'alésage 42.

Ainsi, le pion d'inhibition 43 ou la vis d'inhibition bloque le pivotement du pêne, ce dernier étant maintenu dans sa position de fermeture et assurant le maintien des portes en position escamotée.

Selon une variante représentée sur la figure 7, seule la structure de l'inverseur comprend un alésage 45 positionné à proximité du pêne 25.

L'alésage 45 de la structure fixe de l'inverseur 42 est taraudé et conformé pour recevoir une vis d'inhibition 47. On entend par l'expression « positionné à proximité du pêne » un positionnement de l'alésage 45 dans la surface balayée par le pivotement du pêne lors du passage de sa position de fermeture vers sa position d'ouverture, le positionnement étant tel que le pivotement du pêne 25 est bloqué par la vis d'inhibition 47 de façon à maintenir le pêne 25 dans sa position de fermeture.

On se réfère à présent à la figure 8, illustrant le dispositif d'inhibition mécanique selon l'invention lorsque le dispositif d'inversion de poussée est de type « à grilles ».

Le système de verrouillage/déverrouillage 17 du capot comprend, dans sa position de fermeture, un pêne 49 coopérant avec une gâche 51 supportée par le rail de guidage 53.

Le pêne 49 est solidaire d'une structure fixe 55 de l'inverseur de poussée à grilles.

Le passage du dispositif de verrouillage/déverrouillage 17 depuis une position de fermeture vers une position d'ouverture s'effectue par pivotement du pêne 49 autour d'un axe de pivotement 56 sensiblement radial.

Selon l'invention, un pion d'inhibition 57 est positionné à proximité du pêne 49, dans la surface balayée par le pivotement du pêne lors du passage de sa position de fermeture vers sa position d'ouverture, et tel que le pivotement du pêne 49 est bloqué par le pion d'inhibition 57 de façon à maintenir le pêne 49 dans sa position de fermeture.

Selon une caractéristique de l'invention, les pions d'inhibition 41, 45 et 57 adoptent de préférence une forme cylindrique, mais il va de soi que toute autre forme peut être adoptée, comme par exemple conique ou parallélépipédique si l'homme du métier y trouve un intérêt particulier.

Selon une caractéristique optionnelle commune aux modes de réalisation du dispositif d'inversion de poussée selon l'invention, le système de verrouillage/déverrouillage est un verrou tertiaire.

Grâce à la présente invention, la mise en place du dispositif d'inhibition mécanique est considérablement simplifiée par rapport aux solutions connues de l'art antérieur.

En effet, en agissant sur le dispositif de verrouillage/déverrouillage pour maintenir l'élément mobile de l'inverseur dans sa position escamotée, la durée et le coût de l'opération de maintenance sont largement réduits par rapport à ceux de l'art antérieur.

En outre, en prévoyant un simple pion ou vis pour bloquer le dispositif, le coût du dispositif d'inhibition mécanique est également réduit.

Enfin, comme il va de soi, l'invention ne se limite pas aux seules formes de réalisation de ce dispositif d'inhibition mécanique pour inverseur de poussée, décrites ci-dessus uniquement à titre d'exemples illustratifs, mais elle embrasse au contraire toutes les variantes des moyens décrits ainsi que leurs combinaisons si celles-ci entrent dans le cadre de l'invention, qui est définie par les revendications suivantes.

## Revendications

1. Dispositif d'inversion de poussée (1, 19) pour nacelle de turboréacteur double flux d'aéronef, comprenant :
- des moyens de déviation d'au moins une partie d'un flux d'air du turboréacteur, lesdits moyens de déviation comprenant au moins un élément mobile (11, 21) alternativement entre une position déployée selon laquelle il ouvre un passage dans la nacelle et une position d'escamotage selon laquelle il ferme ledit passage,
- un système de verrouillage/déverrouillage (17, 23) dudit élément mobile (11, 21), mobile alternativement entre une position de fermeture selon laquelle au moins un pêne (25, 49) coopère avec au moins une gâche (27, 29, 51) de façon à assurer le maintien dudit élément mobile dans sa position d'escamotage, et une position d'ouverture selon laquelle ledit pêne libère ladite gâche, de façon à autoriser le passage dudit élément mobile depuis sa position d'escamotage vers sa position déployée,
- un dispositif d'inhibition mécanique dudit élément mobile (11, 21), assurant son maintien dans sa position d'escamotage, ledit dispositif d'inversion de poussée (1, 19) étant **caractérisé en ce que** le dispositif d'inhibition mécanique est installé temporairement et mécaniquement lorsque l'avion est au sol et est conçu pour interdire le déploiement dudit dispositif d'inversion de poussée aussi bien lorsque ledit aéronef est en vol que lorsque ledit aéronef est au sol,
le dispositif d'inhibition mécanique comprenant des moyens (41, 43, 45, 47, 57) pour maintenir le système de verrouillage/déverrouillage (17, 23) dans sa position de fermeture.

2. Dispositif d'inversion de poussée (1, 19) selon la revendication 1, dans lequel le système de verrouillage/déverrouillage (17, 23) comprend :
- au moins un pêne solidaire (25, 49) d'une structure fixe (42, 55) du dispositif d'inversion de poussée et monté pivotant sur un axe de pivotement (33, 56) sensiblement radial, et
- au moins une gâche (27, 29, 51) solidaire dudit élément mobile (11, 21) et adaptée pour coopérer avec ledit pêne (25, 49) au moins pour une position de fermeture dudit système de verrouillage/déverrouillage (17, 23) de façon à assurer le maintien en position d'escamotage dudit élément mobile (11, 21),
ledit dispositif d'inversion de poussée étant **caractérisé en ce que** les moyens (41, 43, 45, 47, 57) pour maintenir le système de verrouillage/déverrouillage dans sa position de fermeture comprennent au moins un pion d'inhibition (43, 45, 57) ou au moins une vis d'inhibition positionné de façon à bloquer le pivotement dudit pêne (25, 49) depuis sa position de fermeture vers sa position d'ouverture.

3. Dispositif d'inversion de poussée (19) selon la revendication 2, dans lequel l'élément mobile est une porte (21) d'un dispositif d'inversion de poussée à portes, **caractérisé en ce que** ladite structure fixe (42) comprend au moins un alésage conformé pour recevoir ledit pion d'inhibition (43, 47) ou ladite vis d'inhibition.

4. Dispositif d'inversion de poussée (19) selon la revendication 3, **caractérisé en ce que** ledit pêne (25) comprend en outre un alésage (41) positionné en regard dudit alésage de la structure fixe (42) du dispositif d'inversion de poussée (19) lorsque le système de verrouillage/déverrouillage (23) est en position de fermeture, conformé pour recevoir ledit pion d'inhibition (43) ou ladite vis d'inhibition.

5. Dispositif d'inversion de poussée (19) selon la revendication 2, dans lequel l'élément mobile est une porte (21) d'un dispositif d'inversion de poussée à portes, **caractérisé en ce que** ladite structure fixe (42) comprend un alésage (45) positionné à proximité dudit pêne (25) et conformé pour recevoir ladite vis d'inhibition de façon à bloquer le pivotement dudit pêne (25) depuis sa position de fermeture vers sa position d'ouverture.

6. Dispositif d'inversion de poussée (1) selon la revendication 2, dans lequel l'élément mobile est un capot d'un dispositif d'inversion de poussée à grilles, ledit capot étant mobile en translation par l'intermédiaire d'au moins un rail de guidage (53) coulissant selon une direction sensiblement parallèle à un axe longitudinal (9) dudit dispositif d'inversion de poussée (1) le long d'au moins une glissière solidaire d'une structure fixe de l'inverseur, ledit dispositif d'inversion de poussée étant **caractérisé en ce que** ledit rail comprend des moyens de support dudit pion d'inhibition (57) ou de ladite vis d'inhibition positionnés à proximité dudit pêne (49) de façon à bloquer le pivotement dudit pêne depuis sa position de fermeture vers sa position d'ouverture lorsque le capot mobile est dans sa position d'escamotage.

7. Dispositif d'inversion de poussée selon la revendication 6, dans lequel la structure fixe dudit dispositif d'inversion de poussée comprend une poutre à 12 heures et au moins un cadre avant, **caractérisé en ce que** ledit capot est un capot du type O-duct.

8. Dispositif d'inversion de poussée (1, 19) selon l'une quelconque des revendications 1 à 7, **caractérisé en ce que** le système de verrouillage/déverrouillage (17, 23) est un verrou tertiaire.

9. Nacelle pour turboréacteur double flux comprenant :
- une section avant d'entrée d'air,
- une section médiane destinée à entourer une soufflante de turboréacteur,
- une section arrière équipée d'un dispositif d'inversion de poussée (1, 19) selon l'une quelconque des revendications 1 à 8.

## Patentansprüche

1. Schubumkehrvorrichtung (1, 19) für eine Zweistromtriebwerksgondel eines Luftfahrzeugs, umfassend:
- Mittel zum Ablenken mindestens eines Teils eines Luftstroms des Triebwerks, wobei die Ablenkmittel mindestens ein Element (11, 21) umfassen, das wechselweise zwischen einer ausgefahrenen Stellung, in der es einen Durchgang in der Gondel öffnet, und einer Versenkstellung beweglich ist, in der es den Durchgang verschließt,
- ein System zum Verriegeln/Entriegeln (17, 23) des beweglichen Elements (11, 21), das wechselweise zwischen einer Verschlussstellung, in der mindestens ein Riegel (25, 49) mit mindestens einem Schließblech (27, 29, 51) zusammenwirkt, um den Halt des beweglichen Elements in seiner Versenkstellung sicherzustellen, und einer Öffnungsstellung beweglich ist, in der der Riegel das Schließblech freigibt, um den Übergang des beweglichen Elements aus seiner Versenkstellung in seine ausgefahrenen Stellung zu gestatten,
- eine Vorrichtung zum mechanischen Sperren des beweglichen Elements (11, 21), die seinen Halt in seiner Versenkstellung sicherstellt, wobei die Schubumkehrvorrichtung (1, 19) **dadurch gekennzeichnet ist, dass** die mechanische Sperrvorrichtung vorübergehend und mechanisch eingebaut wird, wenn sich das Flugzeug am Boden befindet, und so konzipiert ist, dass sie das Ausfahren der Schubumkehrvorrichtung sowohl dann, wenn sich das Luftfahrzeug im Flug befindet, als auch dann unterbindet, wenn sich das Luftfahrzeug am Boden befindet,
wobei die mechanische Sperrvorrichtung Mittel (41, 43, 45, 47, 57) umfasst, um das Verriegelungs-/Entriegelungssystem (17, 23) in seiner Verschlussstellung zu halten.

2. Schubumkehrvorrichtung (1, 19) nach Anspruch 1, wobei das Verriegelungs-/Entriegelungssystem (17, 23) umfasst:
- mindestens einen Riegel (25, 49), der fest mit einer festen Struktur (42, 55) der Schubumkehrvorrichtung verbunden und schwenkbar an einer im Wesentlichen radialen Schwenkachse (33, 56) montiert ist, und
- mindestens ein Schließblech (27, 29, 51), das fest mit dem beweglichen Element (11, 21) verbunden und dafür geeignet ist, mindestens bei einer Verschlussstellung des Verriegelungs-/Entriegelungssystems (17, 23) mit dem Riegel (25, 49) zusammenzuwirken, um den Halt des beweglichen Elements (11, 21) in Versenkstellung sicherzustellen,
wobei die Schubumkehrvorrichtung **dadurch gekennzeichnet ist, dass** die Mittel (41, 43, 45, 47, 57), um das Verriegelungs-/Entriegelungssystem in seiner Verschlussstellung zu halten, mindestens einen Sperrzapfen (43, 45, 57) oder mindestens eine Sperrschraube umfassen, der/die so positioniert ist, dass er/sie das Schwenken des Riegels (25, 49) aus seiner Verschlussstellung in seine Öffnungsstellung blockiert.

3. Schubumkehrvorrichtung (19) nach Anspruch 2, wobei das bewegliche Element eine Klappe (21) einer Schubumkehrvorrichtung mit Klappen ist, **dadurch gekennzeichnet, dass** die feste Struktur (42) mindestens eine Bohrung umfasst, die so ausgestaltet ist, dass sie den Sperrzapfen (43, 47) oder die Sperrschraube aufnimmt.

4. Schubumkehrvorrichtung (19) nach Anspruch 3, **dadurch gekennzeichnet, dass** der Riegel (25) weiter eine Bohrung (41) umfasst, die der Bohrung der festen Struktur (42) der Schubumkehrvorrichtung (19) zugewandt positioniert ist, wenn sich das Verriegelungs-/Entriegelungssystem (23) in Verschlussstellung befindet, die so ausgestaltet ist, dass sie den Sperrzapfen (43) oder die Sperrschraube aufnimmt.

5. Schubumkehrvorrichtung (19) nach Anspruch 2, wobei das bewegliche Element eine Klappe (21) einer Schubumkehrvorrichtung mit Klappen ist, **dadurch gekennzeichnet, dass** die feste Struktur (42) eine Bohrung (45) umfasst, die in der Nähe des Riegels (25) positioniert und so ausgestaltet ist, dass sie die Sperrschraube aufnimmt, um das Schwenken des Riegels (25) aus seiner Verschlussstellung in seine Öffnungsstellung zu blockieren.

6. Schubumkehrvorrichtung (1) nach Anspruch 2, wobei das bewegliche Element eine Haube einer Schubumkehrvorrichtung mit Gittern ist, wobei die Haube mittels mindestens einer Führungsschiene (53), die in einer im Wesentlichen zu einer Längsachse (9) der Schubumkehrvorrichtung (1) parallelen Richtung entlang mindestens einer fest mit einer festen Struktur des Umkehrers verbundenen Gleitbahn verschiebbar ist, translationsbeweglich ist, wobei die Schubumkehrvorrichtung **dadurch gekennzeichnet ist, dass** die Schiene Mittel zum Tragen des Sperrzapfens (57) oder der Sperrschraube umfasst, die in der Nähe des Riegels (49) positioniert sind, um das Schwenken des Riegels aus seiner Verschlussstellung in seine Öffnungsstellung zu blockieren, wenn sich die bewegliche Haube in ihrer Versenkstellung befindet.

7. Schubumkehrvorrichtung nach Anspruch 6, wobei die feste Struktur der Schubumkehrvorrichtung einen Träger auf 12 Uhr und mindestens einen vorderen Rahmen umfasst, **dadurch gekennzeichnet, dass** die Haube eine Haube vom Typ O-Duct ist.

8. Schubumkehrvorrichtung (1, 19) nach einem der Ansprüche 1 bis 7, **dadurch gekennzeichnet, dass** das Verriegelungs-/Entriegelungssystem (17, 23) ein tertiäres Schloss ist.

9. Gondel für ein Zweistromtriebwerk, umfassend:
- einen vorderen Lufteintrittsabschnitt
- einen mittleren Abschnitt, der dazu bestimmt ist, ein Triebwerksgebläse zu umgeben,
- einen hinteren Abschnitt, der mit einer Schubumkehrvorrichtung (1, 19) nach einem der Ansprüche 1 bis 8 ausgerüstet ist.

## Claims

1. A thrust reverser device (1, 19) for an aircraft bypass turbojet engine nacelle, comprising:
- means for deflecting at least one portion of an air flow from the turbojet engine, said deflecting means comprising at least one element (11, 21) alternately movable between a deployed position according to which it opens a passage in the nacelle and a retracted position according to which it closes said passage,
- a system (17, 23) for locking/unlocking said movable element (11, 21), alternately movable between a closed position according to which at least one bolt (25, 49) cooperates with at least one striker (27, 29, 51) so as to ensure the holding of said movable element in its retracted position, and an open position in which said bolt releases said striker, so as to enable the passage of said movable element from its retracted position towards its deployed position,
- a device for mechanically inhibiting said movable element (11, 21), ensuring its holding in its retracted position, said thrust reverser device (1, 19) being **characterized in that** the mechanical inhibition device is temporarily and mechanically installed when the aircraft is on the ground and is designed so as to prevent the deployment of said thrust reverser device both when said aircraft is in flight and when said aircraft is on the ground,
the mechanical inhibition device comprising means (41, 43, 45, 47, 57) for holding the locking/unlocking system (17, 23) in its closed position.

2. The thrust reverser device (1,19) according to claim 1, wherein the locking/unlocking system (17, 23) comprises:
- at least one bolt (25, 49) secured to a fixed structure (42, 55) of the thrust reverser device and pivotally mounted on a substantially radial pivot axis (33, 56), and
- at least one striker (27, 29, 51) secured to said movable element (11, 21) and adapted to cooperate with said bolt (25, 49) at least for a closed position of said locking/unlocking system (17, 23) so as to ensure the holding of said movable element (11, 21) in the retracted position,
said thrust reverser device being **characterized in that** the means (41, 43, 45, 47, 57) for holding the locking/unlocking system in its closed position comprise at least one inhibiting stud (43, 45, 57) or at least one inhibiting screw positioned so as to block the pivoting of said bolt (25, 49) from its closed position towards its open position.

3. The thrust reverser device (19) according to claim 2, wherein the movable element is a door (21) of a thrust reverser device with doors, **characterized in that** said fixed structure (42) comprises at least one bore shaped so as to receive said inhibiting stud (43, 47) or said inhibiting screw.

4. The thrust reverser device (19) according to claim 3, **characterized in that** said bolt (25) further comprises a bore (41) positioned opposite said bore of the fixed structure (42) of the thrust reverser device (19) when the locking/unlocking system (23) is in the closed position, shaped so as to receive said inhibiting stud (43) or said inhibiting screw.

5. The thrust reverser device (19) according to claim 2, wherein the movable element is a door (21) of a thrust reverser device with doors, **characterized in that** said fixed structure (42) comprises a bore (45) positioned in the proximity of said bolt (25) and shaped so as to receive said inhibiting screw so as to block the pivoting of said bolt (25) from its closed position towards its open position.

6. The thrust reverser device (1) according to claim 2, wherein the movable element is a cowl of a cascades thrust reverser device, said cowl being movable in translation via at least one guide rail (53) sliding according to a direction substantially parallel to a longitudinal axis (9) of said thrust reverser device (1) along at least one slide secured to a fixed structure of the thrust reverser, said thrust reverser device being **characterized in that** said rail comprises means for supporting said inhibiting stud (57) or said inhibiting screw positioned in the proximity of said bolt (49) so as to block the pivoting of said bolt from its closed position towards its open position when the movable cowl is in its retracted position.

7. The thrust reverser device according to claim 6, wherein the fixed structure of said thrust reverser device comprises a 12 O'clock beam and at least one front frame, **characterized in that** said cowl is a cowl of the O-duct type.

8. The thrust reverser device (1, 19) according to any one of claims 1 to 7, **characterized in that** the locking/unlocking system (17, 23) is a tertiary lock.

9. A nacelle for a bypass turbojet engine comprising:
- a front air intake section,
- a middle section intended to surround a turbojet engine fan,
- a rear section equipped with a thrust reverser device (1,19) according to any one of claims 1 to 8.
